Europäisches Patentamt

European Patent Office

Office européen des brevets

(19)

(11) Publication number: **0 041 250**
**B1**

(12) **EUROPEAN PATENT SPECIFICATION**

(45) Date of publication of patent specification: **15.08.84**

(51) Int. Cl.³: **F 24 J 3/02**

(21) Application number: **81104128.4**

(22) Date of filing: **29.05.81**

(54) Solar collector.

(30) Priority: **03.06.80 US 155955**

(43) Date of publication of application:
**09.12.81 Bulletin 81/49**

(45) Publication of the grant of the patent:
**15.08.84 Bulletin 84/33**

(84) Designated Contracting States:
**AT BE CH DE FR GB IT LI LU NL SE**

(56) References cited:
**CH - A - 257 348**
**DE - A - 2 518 926**
**DE - A - 2 527 742**
**US - A - 4 046 133**
**US - A - 4 063 547**
**US - A - 4 090 494**

(73) Proprietor: **Hanson, David J.**
**River Road**
**Newcastle Maine 04553 (US)**

(72) Inventor: **Hanson, David J.**
**River Road**
**Newcastle Maine 04553 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

## Description

The invention relates to a solar energy collector including an inclined radiant heat absorbing panel with a plurality of air passageways, an air inlet manifold in fluid communication with said passageways in said panel, an air exhaust manifold in fluid communication with said air passageways of said panel, and a source of pressurized air connected to said air inlet manifold.

With the recognized depletion of fossil fuel as an energy source and the escalating expense of this type of fuel presently available, it has become increasingly apparent that alternate sources of energy are needed for both domestic and industrial heating purposes. Solar heat has been long recognized as being potentially the greatest single source of energy heretofore not used to its full potential. The problem with present solar heating systems is that the efficiency factor is relatively low and the expense of fabricating solar collector systems high as compared to the savings it provides over the use of more conventional heat sources. Other problems which add to the expense include difficulty of installation, particularly on existing homes not specifically designed for solar heat collectors. It is often necessary for completely new roof structures and mounting installations to be formed in order to convert an existing dwelling to solar heat energy.

Most prior art solar collectors are made with heavy and expensive materials increasing the cost of the system and usually reducing the amount of solar radiation reaching the collector core, releasing the heat at a slower rate and increasing energy losses. Many prior art systems also require the use of a circulating fluid for transferring the heat from the solar collector panels to the interior of the dwellings being heated or to suitable storage areas.

A solar energy collector is known in accordance with the prior art portion of claim 1 from the US—A—4,090,494. This solar energy collector comprises a plurality of inclined radiant heat absorbing panels, each of these panels has a plurality of louver fins thereon extending from the panel with openings therebetween, each of the louver fins being generally parallel to the direction of the flow of air through the collector. It is obvious that the construction of these panels is complicated and expensive. Furthermore, the mounting of these panels in the solar energy collector is cumbersome and time-consuming adding the costs of manufacture.

The US—A—4,063,547 discloses a solar heater for heating water passing therethrough. This heater includes a corrugated radiant-heat absorbing panel slanted parallel to the corrugations, a liquid-delivery manifold-pipe along the upper end of the corrugated panel and having discharge apertures in operative registration with the upper ends of the upwardly-facing troughs of such corrugations, and a slotted envelope-protector and liquid-discharge pipe extending across and mounted to the lower edge-zone of the corrugated panel, with the lower edge-zone thereof extending into and tightly fitted in the slot of the pipe. The upper liquid-supply manifold-pipe and the lower liquid-discharge pipe and the corrugated panel therebetween being fully enveloped by and sealed within a flexible envelope formed of pliable weather-resistant plastic sheeting, at least the top panel of which envelope is highly transparent. Such a solar energy collector would not be suited when a gaseous fluid would be used as heat exchange medium. In this case the flowing gaseous fluid would not be conducted via passageways, resulting in a very low efficiency of heat exchange.

As far as further prior art is concerned reference is made to US—A—3,018,087 relating to a heat transfer panel, to US—A—3,859,980 relating to a solar heater and to US—A—4,026,268 relating to a solar energy collector. However, this prior art is not as close as the prior art discussed in detail above.

The invention as claimed is intended to solve the problem of how to provide a low-cost, easily installed collector which utilises air as the heat transfer medium.

One of the advantages offered by the invention is that the construction of air passageways is extremely simple and therefore inexpensive. This construction merely requires a corrugated sheet covered on both sides by a plain sheet. The convolutions of the corrugated sheet and the adjacent plain sheets form the air passageways. A further advantage of the invention is that it can be easily constructed and easily installed. A collector according to the invention can be mounted on the ground, on a wall or on a roof of any existing building. The collector provides heated air which is fed directly into the space to be heated, or it may be tied into the existing heating system within the building. The system uses a pressurized solar collector formed of an outer inflated bag, made out of, for example, polyethylene and used to insulate the corrugated radiant heat collector panel. The panel may be made of plastic metal, but preferably would be cardboard to provide a lighter, less expensive construction. As source of forced air a blower fan, installed within the area to be heated, blows air through suitable duct work into the collector and inflates the polyethylene bag to provide a pressurised insulated system. The air is forced through the corrugated panel air passageways where it is heated. The heated air is then returned to the interior space being heated.

The solar collector of the invention includes mounting means which may be wood or aluminum type supports to mount the collector at an inclined position in order that it may be faced towards the sun's rays.

Preferred embodiments of the invention are claimed by the sub-claims.

One way of carrying out the invention is described in detail below with reference to drawings which illustrate only one specific embodiment, in which

Fig. 1 is a perspective view, partly in section, of the solar collector of the invention,

Fig. 2 is a side view partly in section of the solar collector as it is installed on a building,

Fig. 3 is an exploded view of a part of the solar collector of Fig. 1,

Fig. 4 is a partial, sectional view taken along lines 4—4 of Fig. 1.

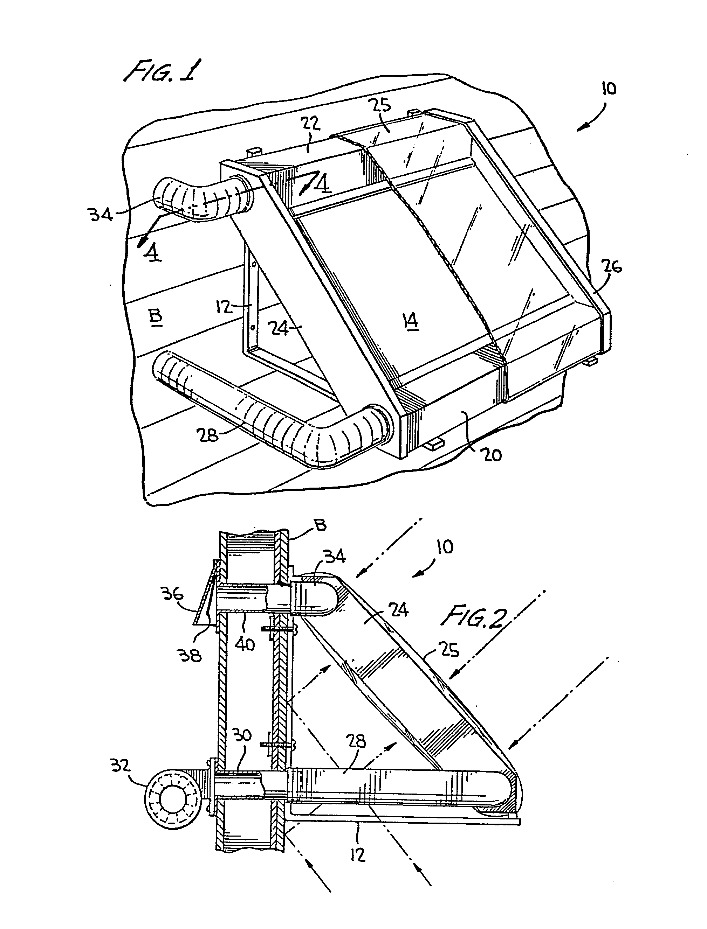

Fig. 1 illustrates a solar collector 10 embodied by the present invention mounted on a building surface B by means of suitable support brackets 12. The brackets may be attached in any conventional manner, depending upon the type of building structure and preferably would be made of wooden cleats or aluminum pipe. The support brackets 12 are generally L-shaped in configuration in order that the solar collector be mounted at an approximate 45° angle in order that it be positioned upwardly toward the sun's rays, whether it is mounted on the ground, a wall, as shown in the drawings, or on a roof structure.

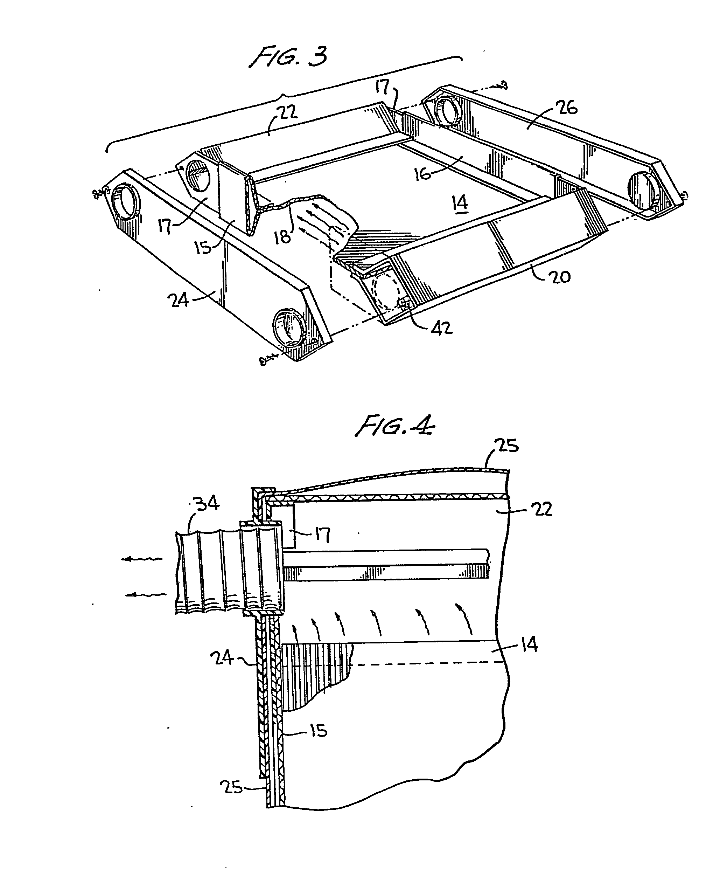

The collector is formed by a heat absorbing panel 14 made of a corrugated material. End frames 15 and 16, also made of the same corrugated material, and an insert 17 are directly attached to or formed integrally with the central panel 14. The corrugated material is preferably corrugated cardboard which would be painted black for maximum heat transfer although suitable metal or plastic corrugated materials are equally efficient. As shown in detail in Figs. 3 and 4, the corrugation in the panel 14 provide a plurality of air passageways 18 through which the air is circulated as described hereinbelow.

The air passageways 18 of the panel 14 in fluid communication with a lower manifold 20 which serves as an air inlet and an upper manifold 22 which serves as an air exhaust. End cap sections 24 and 26 are suitably connected to the manifolds 20 and 22 and to the frame ends 15 and 16 to close the fluid flow path. An outer polyethylene bag 25 is wrapped completely around the heat absorbing panel 14 and is secured between the frame ends 15 and 16 and the end cap sections 24 and 26 as shown in detail in Fig. 4.

The air inlet manifold 20 is connected by a flexible duct 28 and a rigid duct 30 positioned in the wall of the building B into the interior of the building B to a fan 32, as best seen with reference to Fig. 2 of the drawings. The air exhaust manifold 22 is similarly connected by means of a flexible duct 34 to the interior of the building using a vent structure of the type commercially available as a dryer vent kit including a cover 36, hinge flap 38, and duct pipe 40.

The intake and exhaust manifolds 20 and 22 are also formed of a corrugated material into a generally rectangular tube, and secured to the outside of the air passageway panel 16. Each of the manifold members 20 and 22 includes a reinforcing brace 42 which maintains the shape of the manifold units and also which provides a means for securing the end covers 24 and 26 to the manifold sections 20 and 22 using suitable fasteners.

The polyethylene bag 25 which surrounds the interior portions of the structure is made airtight. When the fan 32 is on, the bag 25 is inflated and the interior of the solar collector is pressurized by the air-flow therein. The inflation of the poly-ethylene bag insulates the solar collector for more effective heat transfer.

The solar collector operates as follows. When the fan 32 is turned on, air from the interior of the building being heated is forced through the ducts 28 and 30 into the air intake manifold 20. This intake air also is sufficient to inflate the polyethylene bag 25 in order to pressurize the system due to the leakage around the interior components of the collector. The air is then forced through the air distributing passageways 18 and is heated therein by the warm surface of the panel 14 which is exposed to and absorbs heat from the direct rays of the sun and from reflected radiation from wall or ground surfaces. The heated air then accumulates in the exhaust manifold 22 and is dissipated out of the exhaust duct 34 into the interior of the building being heated.

The collector is a day-time solar radiation collector and cools when not in the direct sun; however, during sunlight periods, an efficient, extremely inexpensive solar collector is provided.

## Claims

1. A solar energy collector (10) including an inclined radiant heat absorbing panel (14) with a plurality of air passageways (18), an air inlet manifold (20) in fluid communication with said passageways (18) in said panel (14), an air exhaust manifold (22) in fluid communication with said air passageways (18) of said panel (14), and a source (32) of pressurized air connected to said air inlet manifold (20), characterised in that the panel (14) comprises a corrugated sheet covered on both sides by a plain sheet, whereby the convolutions of the corrugated sheet and the adjacent plain sheets form the air passageways (18), and in that an inflatable air-tight bag (25) surrounds the panel (14) whereby the interior of the collector (10) is pressurized and the panel (14) is insulated by said source (32) of forced air.

2. The collector according to claim 1, characterised by further including duct means (28, 30) connecting said source (32) of forced air to said air inlet manifold (20) and duct means (34) connected between said air exhaust manifold (22) and said location to be heated.

3. The collector according to claim 2, characterised in that said source of forced air is a blower fan (32).

4. The collector according to claim 1, characterised in that said panel (14) has a black heat absorbing surface.

5. The collector according to claim 1, characterised by further including an L-shaped mounting bracket (12) connected to said collector assembly (10) for mounting the same.

6. The collector according to claim 1, characterised in that said air inlet manifold (20) and said air outlet exhaust manifold (22) are formed of corrugated material and further include reinforcing means (42) to maintain said manifolds (20, 22) in the desired configuration.

7. The collector according to claim 1, characterised by further including end sections (24, 26) connected between said manifolds (20, 22) and forming a closed loop fluid circulation path.

8. The collector according to claim 1, characterized in that said corrugated material is cardboard.

## Revendications

1. Collecteur d'énergie solaire (10) comprenant un panneau (14) incliné absorbant la chaleur radiante, une pluralité de passages (18) à air, une tubulure (20) d'entrée d'air en communication fluide avec les passages (18) à air dans le panneau (14), une tubulure (22) d'évacuation d'air en communication fluide avec les passages à air (18) du panneau (14), et une source (32) d'air de pressurisation reliée à la tubulure (20) d'entrée d'air, caractérisée en ce que le panneau (14) comprend une feuille à nervures recouvertes des deux côtés par une feuille plane, les circonvolutions de la feuille à nervures formant avec les feuilles planes adjacentes les passages d'air (18), et en ce que un sac (25) étanche à l'air et gonflable enveloppe le panneau (14), l'intérieur du collecteur (10) étant pressurisé et le panneau (14) étant gonflé par la source (32) de l'air forcé.

2. Collecteur selon la revendication 1, caractérisé en ce qu'il comprend également des conduits (28, 30) reliant la source (32) de l'air forcé à la tubulure (20) d'entrée d'air et un conduit (34) reliant la tubulure (22) d'évacuation d'air et l'emplacement à chauffer.

3. Collecteur selon la revendication 2, caractérisé en ce que la source de l'air forcé est un ventilateur (32).

4. Collecteur selon la revendication 1, caractérisé en ce que le panneau (14) présente une surface noire absorbant la chaleur.

5. Collecteur selon le revendication 1, caractérisé en ce qu'il comprend aussi des supports (12) de montage en forme de L relié au collecteur (10) pour le montage.

6. Collecteur selon la revendication 1, caractérisé en ce que la tubulure (20) d'entrée d'air et la tubulure (22) d'evacuation d'air sont formées dans un matériau à nervures et en ce qu'il comprend des moyens de renforcement (42) pour maintenir les tubulures (20, 22) dans la configuration désirée.

7. Collecteur selon la revendication 1, caractérisé en ce qu'il comprend également des parties d'extrémité (24, 26) connectées entre les tubulures (20, 22) et formant un circuit de circulation de fluide en boucle fermée.

8. Collecteur selon la revendication 1, caractérisé en ce que le matériau à nervures est du carton.

## Patentansprüche

1. Sonnenkollektor (10) mit einer geneigten, Strahlungs-wärme absorbierenden Platte (14), einer Vielzahl von Luftdurchlässen (18), einer in pneumatischer Verbindung mit den Luftdurchlässen (18) der Platte (14) stehenden Lufteinlaß-Sammelleitung (20), einer in pneumatischer Verbindung mit den Luftdurchlässen (18) der Platte (14) stehenden Luftauslaß-Sammelleitung (22) und mit einer an die Lufteinlaß-Sammelleitung (20) angeschlossenen Quelle (32) für komprimierte Luft, dadurch gekennzeichnet, daß die Platte (14) ein gewelltes Blatt aufweist, das an beiden Seiten von einem ebenen Blatt bedeckt ist, wobei die Wellungen des gewellten Blattes und die benachbarten ebenen Blätter die Luftdurchlässe (18) bilden, und daß ein aufblasbarer, luftdichter Beutel (24) die Platte (14) umgibt, wobei mittels der Quelle (32)) komprimierter Luft das Innerer des Kollektors (10) unter Druck gesetzt und die Platte (14) isoliert ist.

2. Kollektor nach Anspruch 1, dadurch gekennzeichnet, daß weiters Leitungseinrichtungen (28, 30) vorgesehen sind, welche die Quelle (32) komprimierter Luft mit der Lufteinlaß-Sammelleitung (20) verbindet, sowie Leitungseinrichtungen (34), die zwischen die Luftauslaß-Sammelleitung (22) und den zu erwärmenden Ort gershaltet sind.

3. Kollektor nach Anspruch 2, dadurch gekennzeichnet, daß die Quelle komprimierter Luft ein Gebläse ist.

4. Kollektor nach Anspruch 1, dadurch gekennzeichnet, daß daß die Platte (14) eine schwarze, wärmeabsorbierende Oberfläche aufweist.

5. Kollektor nach Anspruch 1, dadurch gekennzeichnet, daß er weiters einen L-förmigen Montageträger (12) besitzt, der mit der Kollektoranordnung (10) zwecks Montage derselben verbunden ist.

6. Kollektor nach Anspruch 1, dadurch gekennzeichnet, daß die Lufteinlaß-Sammelleitung (20) und die Luftauslaß-Sammelleitung (22) aus gewelltem Material hergestellt sind und weiters Verstärkungseinrichtungen (42) aufweisen, un die Sammelleitungen (20, 22) in der gewünschten Form zu halten.

7. Kollektor nach Anspruch 1, dadurch gekennzeichnet, daß er weiters Endabschnitte (24, 26) aufweist, die zwischen den Sammelleitungen (20, 22) angeschlossen sind und eine geschlossene Luftkreislaufschleife bilden.

8. Kollektor nach Anspruch 1, dadurch gekennzeichnet, daß das gewellte Material Wellpappe ist.

0 041 250

*FIG. 1*

*FIG.2*

1

FIG. 3

FIG. 4